# EUROPEAN PATENT APPLICATION

(11) **EP 1 873 183 A1**
(43) Date of publication of application: **02.01.2008**
(21) Application number: 06013596.9
(22) Date of filing: 30.06.2006
(51) Int. Cl.: C08G 63/48, C08G 63/20, C09D 167/08, C09D 5/03

(54) **Branched polyester containing powder coating composition**

(71) Applicant: DSM IP Assets B.V., 6411 TE Heerlen (NL)
(72) Inventor: Urmanova, Antonia, 8014 LB Zwolle (NL); Berg Jeths, Van Den, Robert, 7323 MB Apeldoorn (NL); Buijsen, Paulus Franciscus Anna, 3144 GD Maasluis (NL)
(74) Representative: van Tol-Koutstaal, Charlotte A.

(57) **Abstract**

The invention relates to binder comprising a crosslinker and a branched, partially defunctionalized acid-functional polyester, wherein the polyester is based on
a. At least one multi-functional component that is either carboxyl- functional, hydroxyl- functional or carboxyl- and hydroxyl- functional,
b. At least one di-functional component that is reactive towards a functional group on the multi-functional component and
c. At least one mono-functional component

and wherein the multi- functional component does not contain a tertiary carbon atom and at least 50% of the acid-derived groups originate from an aromatic acid.

## Description

The invention relates to a binder composition comprising a branched, acid-functional polyester, the invention further relates to a branched polyester, a powder coating composition comprising the binder composition and a substrate coated with the powder coating composition and the cured coating.

Powder coatings based on polyesters and epoxy-containing compounds, like for example tris-glycidyl-isocyanurate (TGIC) and bisphenol-A epoxy, are known already for a long time. However TGIC is mutagenic and bisphenol-A epoxy is suspected to be carcinogenic. Therefore paint producers and consumers are searching for alternatives to replace these kinds of components in powder coatings.

For outdoor applications this replacement seems to be found in β-hydroxy- alkylamide (Primid®-like) systems. The most important property, that is the weather resistance, is satisfactorily met by the β-hydroxy- alkylamide systems. From the other side, the TGIC powder coatings are still better than the β-hydroxy- alkylamide -based powder coatings, with regard to properties as for example degassing limit, salt spray, blanching, humidity, boiling water resistance and control over the curing speed by a given curing temperature (pill flow and anti-dripping properties).

For indoor applications, the most important property that should be met is the chemical resistance. The prior art polyester/ bisphenol-A epoxy systems, also referred to as hybrid systems, have a very good chemical resistance that up to now could not be matched by alternatives. Also the newer β-hydroxy- alkylamide based outdoor systems and other prior art outdoor systems were unsatisfactory compared to the hybrids. Additionally the price of the newer systems is higher than the price of the hybrid systems, thus to be comparable, less of the more expensive compound, that is the crosslinker, should be added. In order to lower the amount of crosslinker in the binder, the resin in the binder should have a lower acid value. But lowering the acid value also diminishes the flow, the appearance of the final coating, its chemical resistance and will sometimes lead to a reduction in the mechanical properties.

Therefore it is an object of the present invention to overcome the disadvantages mentioned above and to make available an epoxy-free binder suitable for use in a powder coating composition, which binder gives rise to coatings with comparable properties as prior art epoxy-based systems without compromising the properties of the current epoxy systems. Thus the binder should give rise to comparable flow and appearance, good chemical and mechanical properties, for example flexibility, blanching resistance and boiling water resistance, degassing limit, salt spray and humidity.

This object is reached by a binder comprising a crosslinker and a branched, partially defunctionalized acid-functional polyester, wherein the polyester is based on
a. At least one multi-functional component that is either carboxyl- functional, hydroxyl- functional or carboxyl- and hydroxyl- functional,
b. At least one di-functional component that is reactive towards a functional group on the multi-functional component and
c. At least one mono-functional component
and wherein the multi- functional component does not contain a tertiary carbon atom and at least 50% of the acid-derived groups originate from an aromatic acid.

With binder is here and hereinafter meant the combination of a resin with a separate crosslinker. With separate crosslinker is meant that the crosslinker is chemically distinct from the resin. It is within the scope of the invention to use more than one resin and/ or more than one crosslinker in the binder. With multi- functional component is meant a component that has a functionality of three or higher.

A polyester is generally prepared by the reaction between an acid, or an acid derivative and an alcohol, this reaction is called an esterification reaction. To obtain a polyester-chain it will be necessary to use at least di-functional starting components. The combination of a di-functional acid with a di-functional alcohol will lead to the formation of a linear polyester. When at least one of the components is multi- functional, a branched polyester will generally be obtained.

For the polyester according to the invention, it is necessary to use at least one multi-functional component, at least one di-functional component and at least one mono-functional component. It is less relevant whether the acid is the multi-functional component or the alcohol is the multi-functional component. When the acid is chosen to be a multi-functional component then the alcohol will be the two-functional component, or when the alcohol is chosen to be the multi-functional component then the acid will be the di-functional component. The man skilled in the art will understand that it is also possible to use combinations of the acids and alcohols. With combination is meant here both a combination over the chemical nature as well as over the functionality. Thus it is possible within the scope of the invention to use for example, as the acid a combination of two or more different acids with the same functionality. However it is evenly well possible to combine at least one di-functional acid with at least one multi- functional acid and the same holds for combinations of alcohols.

The choice of the starting components for the esterification reaction determines the properties of the polyester obtained. Examples of properties influenced by the choice of the starting components are mechanical properties, such as for example impact resistance, flexibility outdoor durability, chemical resistance, boiling water resistance, salt-spray resistance, glass transition temperature and powder stability. Another important parameter in the esterification reaction is the ratio between the acid or acid derivative and the alcohol. This ratio determines, amongst others, the character of the polyester as being either acid-functional or hydroxyl-functional, the acid value, the molecular weight and the functionality of the polyester.

Here and hereinafter where an acid is mentioned as component in the esterification reaction also acid derivatives can be used, as the skilled person will easily understand. With acid derivatives are meant these components that react in the esterification reaction in a comparable way as the acid would do. Examples of suitable acid derivatives are acid anhydride, acid chloride, or lower alkyl esters of the acids. With lower alkyl ester is meant a C1-C6 linear or branched alkyl ester. It is preferred to use either the acid or the acid anhydride because no undesirable or harmful byproducts are formed.

In the preparation of the branched partially defunctionalized acid-functional polyester according to the invention at least 50 mol% of the acid-derived groups originate from an aromatic acid. The rest of the acid-derived groups may originate from, for example, a linear or branched aliphatic acid or cyclo-aliphatic acid. It is preferred to have at least 75 mol%, more preferably 85% and most preferably 95% of the acid-derived groups originating from an aromatic acid.

Examples of suitable di-functional aromatic acids for use in the invention are phthalic acid, isophthalic acid, naphthalene dicarboxylic acid, terephthalic acid, 3,6-dichlorophthalic acid and tetrachloro phthalic acid or mixtures of any of them. Preferably isophthalic acid, terephthalic acid, their anhydride or a mixture of any of them is used.

The multi-functional component used for preparing the polyester according to the invention is either carboxyl- functional, hydroxyl- functional or carboxyl- and hydroxyl- functional. It is preferred to have one type of functional groups on the multi-functional component thus to have only either carboxyl-functional or hydroxyl-functional groups. Examples of suitable multi- functional aromatic acids are trimellitic acid, pyromellitic acid, their anhydrides or mixtures of any of them.

Examples of suitable acids for use next to the aromatic acid are cyclohexane dicarboxylic acid (CHDA), tetrahydro phthalic acid, hexahydro phthalic acid, hexachloro-tetrahydro phthalic acid, azeleic acid, sebacic acid, decane dicarboxylic acid, hydroxy stearic acid, adipic acid, succinic acid and maleic acid, their anhydrides or mixtures of any of them. Preferably CHDA, hydroxy stearic acid, adipic acid, succinic acid, maleic acid, their anhydrides or mixtures of any of them are used.

The alcohols that are used in the synthesis of the branched partially defunctionalized acid-functional polyester according to the invention are at least di-functional, so as to make it possible to obtain a polyester with a polymeric chain length. The alcohols to be used in the polyester according to the invention can have a varying character, so for example aliphatic alcohols can be used but also for example aromatic or cyclo-aliphatic alcohols. Both linear and branched alcohols can be used in the esterification reaction. Examples of suitable di-functional alcohols are ethylene glycol, 1,2- propanediol, 1,3-propanediol, 1,2-butanediol, 1,4-butanediol, 1,3-butanediol, 2,2-dimethyl-1,3-propanediol (= neopentyl glycol), 2,5-hexanediol, 1,6-hexandiol, 2,2-[bis-(4-hydroxy-cyclohexyl)]-propane, 1,4-dimethylol cyclohexane, diethylene glycol and dipropylene glycol or mixtures of any of them. Examples of multi-functional alcohols are glycerol, hexanetriol, pentaerythritol, sorbitol, trimethylol ethane (TME), ditrimethylol propane, rimethylol propane (TMP) or mixtures of any of them. Preferably glycerol, TME, TMP or mixtures of any of them are used.

The at least one mono-functional component in the polyester according to the invention can both be an acid or acid derivative as defined above or an alcohol. Preferably an acid or acid derivative is chosen as the mono- functional component. Examples of mono-functional aromatic acids are benzoic acid, tert.butyl benzoic acid, naphthalene carboxylic acid or mixtures of any of them. Examples of mono-functional aliphatic acids are all linear and/or branched aliphatic monocarboxylic acids with 1-36 carbon atoms, for example fatty acids such as for example stearic acid, 2-ethylhexane carboxylic acid, versatic acid, lauric acid or mixtures of any of them. Preferably the mono-functional aliphatic acid is saturated.

Examples of mono-functional alcohols are octanol, butanol, 2-ethylhexanol, isodecylalcohol, cyclohexanol, pentanol, hexanol, benzyl alcohol or mixtures of any of them.

It appeared advantageous when the functional groups in the multi-functional components a, di-functional component b, or mono-functional component c, are not connected directly to a tertiary carbon atom. Preferably the mono-functional component is reactive towards a functional group on the multi-functional component.

The polyester can be prepared by esterification or trans-esterification as is well-known to the man skilled in the art.

The polyester obtained by reacting the required components in the required amounts, is an acid-functional polyester. With acid-functional polyester is here and hereinafter meant a polyester that has a substantially higher acid-value than hydroxyl-value. With substantially higher is meant that the acid-value is at least twice the hydroxyl-value. Preferably the hydroxyl-value is less than 25% of the acid value, more preferably the hydroxyl-value is less than 10% of the acid value. The acid value of the polyester according to the invention will generally lie between 5 and 300 mg KOH/ g resin, preferably between 15 and 250. It is clear that in all cases the hydroxyl value is lower than the acid value as else not an acid-functional polyester is obtained.

The amount of acid groups is determined by the titration of the acid/anhydride groups by KOH. The amount of acid groups is expressed as the acid- value (AV) in mg KOH/ g polyester. The amount of hydroxyl groups is determined by the titration of the hydroxyl groups with acetic anhydride and the back titration with KOH. The amount of hydroxyl groups is expressed as the hydroxyl-value (OH-value, OHV) in mg KOH used per g polyester.

The polyester according to the invention is preferably an amorphous polyester. With "amorphous" is meant that the polyester does not show a sharply defined melting on crystallization peak on a second DSC scan at a rate of 5°C/min. Generally, an amorphous polymer and/or polymer composition is characterized by a high degree of transparency (clarity) and a lack of a sharply defined melting point. With amorphous is meant here that the amount of crystallinity calculated from the DSC-measurement is less than 10%, preferably less than 5% and more preferably less than 1%.

The glass transition temperature (Tg) of the polyester according to the invention generally lies above 30 °C. Preferably the Tg is higher than 40 °C, more preferably the Tg is above 50 °C. The higher the Tg, the better the powder stability is. Additionally a high Tg is advantageous because of increased hardness of the final coating when using resins with higher Tg. The Tg is measured by differential scanning calorimetry (DSC) at a scan rate of 5°C/min. The Tg can be varied by the choice and ratio of the separate components and can thus be tailored to the needs. The man skilled in the art of powder coatings knows or can easily without undue burden, determine the desired components.

In a preferred embodiment of the invention the at least one di-functional component comprises ethylene glycol. It was found that already the addition of a relatively small amount of ethylene glycol can improve the chemical and boiling water resistance significantly. Already an amount of at least 8 mol% of ethylene glycol improves these properties. Preferably at least 10 mol% of ethylene glycol is incorporated in the di-functional alcohol, more preferably at least 15 mol% is added.

An additional advantage of the addition of ethylene glycol is that the mechanical properties are also improved. This effect was particularly pronounced in polyesters that are based on propylene glycol, preferably the polyesters have more than 40 mol% of the total alcohol as propylene glycol. Polyesters that are based on at least 40 mol% (based on the total of alcohol) of the propylene glycol benefit most from these improvements as they normally tend to have poor mechanical properties such as impact. Thus it was surprisingly found that the addition of ethylene glycol to the polyesters in general and the propylene glycol-containing polyesters in particular, improved the mechanical properties significantly.

A further advantage of the addition of ethylene glycol as a component in the polyester synthesis is that the flexibility improves. Polyesters wherein neopentyl glycol takes at least 50 mol% of the total alcohol content, have generally good mechanical properties, especially when combined with β-hydroxy- alkylamide. However when at least 8% ethylene glycol is added the flexibility of the resin increases. Consequently these ethylene glycol modified polyesters can be used in high filled compositions or for coating for post-forming.

It was found that the susceptibility to surface defects of coatings containing ethylene glycol based polyesters, could be improved by the addition of long aliphatic chain fatty acids in combination with a multi-functional compound in the polyester synthesis, without losing on the reactivity of the total coating system. Because most of the commercially available fatty acids are mono-functional or mixtures of mono- and di-functional acids with a total functionality of less than 2, a certain amount of multi-functional component is needed to compensate for the loss of functionality due to the addition of mono-functional component otherwise reactivity and flexibility of the total coating system will be lost.

With long aliphatic chain fatty acids are meant mono-, di-functional or mixtures of mono- and di-functional acids with at least 8 carbon atoms in the chain. Preferably the chain contains at least 12 carbon atoms. The aliphatic chain should not be too long therefore a suitable maximum number for the carbon atoms in the chain is at most 36 C-atoms. Preferably the maximum number is at most 30 carbon atoms. A suitable range for the number of carbon atoms is 12-30 carbon atoms. The chain of the fatty acid can be linear or branched, however linear is preferred. Both saturated and unsaturated fatty acids can be used, however it is preferred to use saturated fatty acids. Examples of suitable mono-functional fatty acids are stearic acid, 2-ethylhexane acid, versatic acid, lauric acid, coconut fatty acid, palmitic fatty acid, myristic fatty acid, soy bean oil fatty acid, tallow oil fatty acid or a mixture of any of them.

Suitable di-functional fatty acids are hydroxy fatty acids. For example hydroxy stearic acid. The hydroxy fatty acids are usually obtained by hydroxylation of mono-unsaturated fatty acid. Because natural raw materials are used it is very difficult to obtain products with high purity.The commercially available hydroxy fatty acids are usually mixtures of di-functional and mono- functional fatty acid. Even though the hydroxy fatty acids are called di-functional, they contain mono-functional components. Preferable the used fatty acids are saturated acids, more preferably stearic acid is used.

The polyester according to this embodiment of the invention can thus be described as a branched, partially defunctionalized, acid-functional polyester, wherein the polyester is based on
a. At least one multi-functional component that is either carboxyl- functional, hydroxyl- functional or carboxyl- and hydroxyl- functional,
b. At least 8 mol% of ethylene glycol and
c. At least one long aliphatic chain mono-functional fatty acid
and wherein at least 50% of the acid-derived groups originate from an aromatic acid.

It was found to be advantageous when the multi- functional component did not contain a tertiary carbon atom. For the multi-functional component the same preferences hold as described for the polyester above.

The polyester according to this embodiment of the invention can advantageously be used in a binder comprising a crosslinker and this polyester. The binder combines very well the properties flexibility and reactivity.

In another preferred embodiment of the invention the at least one mono-functional component is chosen to be an aliphatic mono-carboxylic acid. With the implementation of stricter volatile organic compound- (VOC) regulations, there is a growing need for coating compositions which give rise to low VOC or even better: powder coating compositions. One of the challenges of using powder coating compositions will be to overcome the poor adhesion and salt spray resistance on a so called "difficult" or poor pretreated substrates like galvanized steel, hot dipped and cold rolled steel.

The polyesters used for powder coating for outdoor applications usually have a theoretical functionality, F, between 2 and 2,5. The reason for that is that the cross-linkers self have a theoretical functionality higher than 2 (for example TGIC =3 and Primid®=4). From the other side using polyesters with functionality higher than 2 will lead to a coating with poor gloss and appearance, worse flow, bad DOI and when β-hydroxyalkylamide is used as a cross-linker also lower degassing limit. Usually improvement of the corrosion resistance (salt spray) can be achieved with increase of the cross-link density of the coating. But as above was already mentioned the increase of the functionality of the resin would lead to a certain disadvantages.

It was found that using a branched partially defunctionalized acid-functional polyester that is based on
a. At least one multi-functional component that is either carboxyl- functional, hydroxyl- functional or carboxyl- and hydroxyl- functional,
b. At least one di-functional component that is reactive towards a functional group on the multi-functional component and
c. At least one long chain fatty acid as mono-functional component
and wherein at least 50% of the acid-derived groups originate from an aromatic acid, overcomes or at least reduces the disadvantages mentioned above. An additional advantage of this polyester is that it will also overcome the problems with the lower degassing limit and the higher reactivity of the branched resins during the introduction of additional cross-linking in the coating. Another additional advantage is that the chemical nature of the fatty acid helps the coating to protect a substrate under corrosion conditions better. It was found to be advantageous when the multi- functional component did not contain a tertiary carbon atom.

With long aliphatic chain fatty acids are meant linear or branched mono-functional acid or mixtures thereof with at least 8 carbon atoms in the chain. Preferably the chain contains at least 12 carbon atoms. The aliphatic chain should not be too long therefore a suitable maximum number for the carbon atoms in the chain is at most 36 C-atoms. Preferably the maximum number is at most 30 carbon atoms. A suitable range for the number of carbon atoms is 12-30 carbon atoms. Examples of suitable mono-functional fatty acids are stearic acid, 2-ethylhexane acid, versatic acid, lauric acid, coconut fatty acid, palmitic fatty acid, myristic fatty acid, soy bean oil fatty acid, tallow oil fatty acid or a mixture of any of them. Preferable the fatty acid is a saturated acid, more preferably stearic acid.

For the multi-functional component the same preferences hold as described for the polyester above.

The polyester according to this embodiment of the invention can advantageously be used in a binder comprising a cross-linker and this polyester for powder coating with improved corrosion resistance.

In again another preferred embodiment of the invention the at least one mono-functional component is chosen to be benzoic acid or substituted benzoic acids. Here and hereinafter benzoic acid and substituted benzoic acid will together be referred to as "benzoic acid". It was discovered that the use of benzoic acid as part of the mono-functional component in the polyester according to the invention resulted in an increased blister limit for the coating obtained from a binder according to the invention. Blistering is the formation of dome-shaped, liquid or gas-filled projections in a film resulting from local loss of adhesion and lifting of the film from the underlying surface or coating. The blister limit is the maximum thickness of the film which does not contain blisters. It is very advantageous to have a high blister limit as it is then possible to apply a thick layer of coating onto a substrate without loosing on the protection of the substrate's surface by the pealing off of parts of the coating. Substrates with thick layers will have a better protection and barrier properties especially under severe conditions, such as for example exposure to the marine environment.

A suitable example for substituted benzoic acid is tertiary butyl benzoic acid.

The benzoic acid can be used as part of the mono-functional component in the polyester synthesis, thus next to other mono-functional components. Preferably at least 50 mol% of the mono-functional component is made up by the benzoic acid, more preferably at least 75% is used, most preferably 100% of the mono-functional component is benzoic acid. The use of mono-functional acids will decrease the total functionality of the resin. Addition of a certain amount of multi-functional component is needed to compensate for the loss of functionality, otherwise the reactivity, the flexibility, the crosslink density and other protective properties of the total coating system will be compromised.

The polyester according to this embodiment of the invention can thus be described as a branched, partially defunctionalized acid-functional polyester, wherein the polyester is based on
a. At least one multi-functional component that is either carboxyl- functional, hydroxyl- functional or carboxyl- and hydroxyl- functional,
b. At least one di-functional component that is reactive towards a functional group on the multi-functional component and
c. At least one mono-functional component comprising at least benzoic acid or substituted benzoic acid,
and wherein at least 50% of the acid-derived groups originate from an aromatic acid.
It was found to be advantageous when the multi- functional component did not contain a tertiary carbon atom.

In again another embodiment of the invention the at least one mono-functional component is chosen to be cinnamic acid or an aliphatically unsaturated substituted aromatic acid. The polyester according to this embodiment of the invention can thus be described as a branched, partially defunctionalized acid-functional polyester, wherein the polyester is based on
d. At least one multi-functional component that is either carboxyl- functional, hydroxyl- functional or carboxyl- and hydroxyl- functional,
e. At least one di-functional component that is reactive towards a functional group on the multi-functional component and
f. At least one mono-functional component comprising at least cinnamic acid or an aliphatically unsaturated substituted aromatic acid, and wherein at least 50% of the acid-derived groups originate from an aromatic acid.

It was found to be advantageous when the multi- functional component did not contain a tertiary carbon atom. Here and hereinafter cinnamic acid and aliphatically unsaturated substituted aromatic acid will together be referred to as "cinnamic acid".

It was found that the use of cinnamic acid as part of the mono-functional component in the polyester according to the invention resulted in improved adhesion of the coating to the substrate when the coating was derived from a binder comprising the polyester.

The cinnamic acid can be used as part of the mono-functional component in the polyester synthesis, thus next to other mono-functional components. Preferably at least 50 mol% of the mono-functional component is made up by the cinnamic acid, more preferably at least 75% is used, most preferably 100% of the mono-functional component is cinnamic acid. An additional advantage of the use of cinnamic acid appeared to be that the acid acted as a built-in anti-oxidant. Therefore the coating obtained from a binder comprising the polyester will have improved long-term UV-resistance.

The invention not only relates to the polyesters as described under the various embodiments, it also relates to binders comprising these polyesters and at least one crosslinker. Generally, the weight ratio polyester: crosslinker ranges between 50:50 and 98:2 and more preferably this ratio ranges between 75:25 and 95:5. The selection of the ratio is dependent on for example the selected crosslinker and the end application of the coating.

The preparation of thermosetting powder coatings in general and the chemical reactions for curing powder coatings to form cured powder coatings are described by Misev in Powder Coatings, Chemistry and Technology (1991, John Wiley) on pp. 42-54, pp. 148 and 224-226. Test procedures are described at pages 284-300. A thermosetting powder coating binder composition is generally defined as the resinous part of the powder coating composition consisting of polymer and crosslinker and this composition generally contains more than 50 wt.% polymer and less than 50 wt.% crosslinker.

The invention also relates to powder coating compositions comprising the binder according to the various embodiments and at least one additive. Examples of additives are pigment, filler, degassing agent, flow agent and/ or stabilizer. Suitable pigments are for example inorganic pigments, such as for example titanium dioxide, zinc sulphide, iron oxide and chromium oxide, and also organic pigments such as for example azo compounds. Suitable fillers are for example metal oxides, silicates, carbonates and sulphates. Primary and/or secondary antioxidants, UV stabilizers such as quinones, (sterically hindered) phenolic compounds, phosphonites, phosphites, thioethers, HALS compounds (hindered amine light stabilizers) and aromatic amines, may for example be used as stabilizers. Examples of degassing agents are benzoin and cyclohexane dimethanol bisbenzoate. The flow agents include for example polyalkylacrylates, fluorohydrocarbons and silicone fluids. Other suitable additives are for example additives for improving tribocharging, such as sterically hindered tertiary amines that are described in EP-B-371528.

Powder coating compositions according to the invention can be applied to a suitable substrate in the usual manner, for example by electrostatically spraying the powder onto an earthed substrate and curing the powder coating composition to a powder coating by exposing the powder coating composition to heat at a suitable temperature for a sufficient length of time. The applied powder can for example be heated in a gas oven, an electric oven or with the aid of infrared radiation or UV-radiation.

The invention further relates to a coating obtained after curing the powder coating composition. These coatings have very advantageous properties as described under the various embodiments. The powder coating compositions can be applied to all kinds of substrates. Examples of suitable substrates are metal, (galvanized) steel, cast iron, other alloys, glass, ceramic and bricks.

The invention also relates to a substrate fully or partially coated with a powder coating composition according to the invention.

## Claims

1. Binder comprising a crosslinker and a branched, partially defunctionalized acid-functional polyester, wherein the polyester is based on
a. At least one multi-functional component that is either carboxyl- functional, hydroxyl- functional or carboxyl- and hydroxyl- functional,
b. At least one di-functional component that is reactive towards a functional group on the multi-functional component and
c. At least one mono-functional component
and wherein the multi- functional component does not contain a tertiary carbon atom and at least 50% of the acid-derived groups originate from an aromatic acid.

2. Binder according to claim 1 **characterized in that** multi-functional component is either carboxyl- functional or hydroxyl- functional.

3. Binder according to claim 1 or 2 **characterized in that** mono-functional component is an acid or acid derivative.

4. Branched, partially defunctionalized, acid-functional polyester, wherein the polyester is based on
a. At least one multi-functional component that is either carboxyl- functional, hydroxyl- functional or carboxyl- and hydroxyl- functional,
b. At least 8 mol% of ethylene glycol and
c. At least one long aliphatic chain mono-functional fatty acid and wherein at least 50% of the acid-derived groups originate from an aromatic acid.

5. Branched, partially defunctionalized, acid-functional polyester according to claim 4 **characterized in that** the multi- functional component does not contain a tertiary carbon atom.

6. Branched, partially defunctionalized, acid-functional polyester according to claim 4 or 5 **characterized in that** the polyester is based on propylene glycol.

7. Branched, partially defunctionalized acid-functionalized polyester that is based on
a. At least one multi-functional component that is either carboxyl- functional, hydroxyl- functional or carboxyl- and hydroxyl- functional,
b. At least one di-functional component that is reactive towards a functional group on the multi-functional compound and
c. At least one long chain fatty acid as mono-functional component
and wherein at least 50% of the acid-derived groups originate from an aromatic acid

8. Branched, partially defunctionalized, acid-functional polyester according to claim 7 **characterized in that** the multi- functional component does not contain a tertiary carbon atom.

9. Branched, partially defunctionalized acid-functional polyester, wherein the polyester is based on
a. At least one multi-functional component that is either carboxyl- functional, hydroxyl- functional or carboxyl- and hydroxyl- functional,
b. At least one di-functional component that is reactive towards a functional group on the multi-functional component and
c. At least one mono-functional component comprising at least benzoic acid or substituted benzoic acid,
and wherein at least 50% of the acid-derived groups originate from an aromatic acid.

10. Branched, partially defunctionalized acid-functional polyester, wherein the polyester is based on
a. At least one multi-functional component that is either carboxyl- functional, hydroxyl- functional or carboxyl- and hydroxyl- functional,
b. At least one di-functional component that is reactive towards a functional group on the multi-functional component and
c. At least one mono-functional component comprising at least cinnamic acid or an aliphatically unsaturated substituted aromatic acid,
and wherein at least 50% of the acid-derived groups originate from an aromatic acid

11. Binder comprising a polyester according to any one of claim 4-10 and at least one crosslinker.

12. Powder coating composition comprising a binder according to claim 11 and at least one additive.

13. Coating obtained after curing a powder coating composition according to claim 12.

14. Substrate fully or partially coated with a powder coating composition according to claim 12.
